# EUROPEAN PATENT APPLICATION

(11) **EP 4 641 339 A1**
(43) Date of publication of application: **29.10.2025**
(21) Application number: 24171965.7
(22) Date of filing: 23.04.2024
(51) Int. Cl.: G05D 1/246, G05D 1/622, G05D 1/644, G05D 101/15, G05D 109/12

(54) **LEGGED ROBOT LOCOMOTION CONTROL TRAINED IN REINFORCEMENT LEARNING BASED ON HETEROGENEOUS ENVIRONMENTAL REPRESENTATIONS**

(71) Applicant: ANYbotics AG, 8050 Zürich (CH)
(72) Inventor: Hölbling, René, 8050 Zürich (CH); Yuryev, Valentin, 8050 Zürich (CH); Gehring, Christian, 8050 Zürich (CH); Gaertner, Magnus Franz, 8050 Zürich (CH); Viña Barrientos, Francisco Eli, 8050 Zürich (CH); Vijayan, Aravind Elanjimattathil, 8050 Zürich (CH)
(74) Representative: E. Blum & Co. AG

(57) **Abstract**

The invention is notably directed to a computer-implemented method of operating a legged robot. The method repeatedly performs algorithmic cycles at the robot. Each cycle comprises updating a state of the robot as well as heterogeneous representations (321, 322, 323) of an environment of the robot based on signals from a set of sensors. The heterogeneous representations are of different kinds and/or dimensions and, therefore, represent different contents or, at the very least, represent them in different ways. They include a first representation (321), such as a spherical ego-centric map, and a second representation (322), such as an obstacle map. Next, the method generates an initial trajectory that avoids obstacles in the first representation. The initial trajectory is generated through a first model (2061) based on the first representation (321) and the robot's state as updated last, where the first model is a computational model that has been trained in reinforcement learning. The method subsequently executes a second model (2062) based on the initial trajectory, as well as the state of the robot and the second representation as updated last, to obtain a collision-free trajectory. A third representation (323), such as an elevation map, may be used by a low-level policy (208) to generate low-level commands. The robot is eventually controlled according to the low-level commands generated to cause a legged locomotion of the robot. The invention is further directed to related systems and computer program products.

## Description

### TECHNICAL FIELD

The invention is directed to computer-implemented methods of operating a legged robot, as well as related control systems and computer program products. In particular, it is directed to a method for operating a legged robot based, where distinct computational models, relying on respective, heterogeneous representations of the environment of the robot, are used to generate collision-free trajectories, based on which the robot is controlled for legged locomotion.

### BACKGROUND

Legged robots operate in a variety of environments, encountering numerous challenges that require sophisticated control systems to navigate effectively. These robots process sensory information to update their perception of the environment, accordingly generate trajectories to avoid obstacles, and execute commands for legged locomotion. Existing systems often struggle with the computational demands of real-time processing and the need for accurate, collision-free navigation.

Current solutions for controlling legged robots typically involve complex algorithms, which notably involve graph search, sampling, interpolating curves, or reactive strategies, to navigate around obstacles. These algorithms can be computationally intensive, limiting the robot's ability to operate in real-time and adapt to dynamic environments.

### SUMMARY

According to a first aspect, the invention is embodied as a computer-implemented method of operating a legged robot. The method repeatedly performs algorithmic cycles at the robot. Each cycle comprises updating a state of the robot as well as heterogeneous representations of an environment of the robot based on signals from a set of sensors. The heterogeneous representations are of different kinds and/or dimensions and, therefore, represent different contents or, at least, represent contents in different ways. They include a first representation, such as a spherical ego-centric map, and a second representation, such as an obstacle map.

They may include a third representation, such as an elevation map, for reasons that will become apparent below. Next, the method generates an initial trajectory that avoids obstacles in the first representation. This initial trajectory is generated through a first model based on the first representation and the robot's state as updated last, where the first model is a computational model that has been trained in reinforcement learning (RL). The method subsequently executes a second model based on the initial trajectory, as well as the state of the robot and the second representation as updated last, to obtain a collision-free trajectory. The robot is eventually controlled according to commands generated based on the collision-free trajectory to cause a legged locomotion of the robot.

According to the present approach, the two models use distinct (heterogeneous) representations of the environment and different algorithms. This is computationally more efficient at runtime, inasmuch as the types of the representations used can be tailored for the two models. For example, the first model (RL-trained) may rely on a spherical map to efficiently infer the initial trajectory, while data extracted from a 2D obstacle map are sufficient for the second model to obtain a collision-free trajectory, which speeds up computations. Compared with a fully redundant verification scheme, the present approach requires less processing power. Meanwhile, the heterogeneity of the verification scheme increases safety and eventually benefits the trajectories generated. I.e., the second model makes it possible to mitigate the risk of collision, thanks to a different viewpoint. On the contrary, relying on a single type of environmental representation may lead to suboptimal path planning and increased risk of collision.

In embodiments, the first model and the second model form part of a high-level policy model. The method further comprises, at each cycle, generating commands by feeding the collision-free trajectory, the state of the robot, and one of the heterogeneous representations as updated last, to a third model. The third model is a low-level policy model. The third model repeatedly generates the commands as low-level commands, i.e., several times during a same cycle, whereby low-level commands are generated at a frequency higher than the frequency at which the collision-free trajectory is obtained. Preferably, the third model is based on model predictive control and/or includes another trained computational model, e.g., a model trained in RL. It is computationally more effective to plan a high-level initial trajectory (first model) at a relatively low frequency, revise this trajectory at the same frequency (second model) to ensure a collision-free trajectory, and then repeatedly generate low-level commands at a higher frequency, rather than directly optimising commands (at the intended frequency) fulfilling all constraints. This, in practice, allows faster computation cycles, such that the above solution can, notwithstanding its complexity, be more tractably implemented in real-time by a control system of a legged robot, using conventional hardware i.e., CPU(s) and, if necessary, GPU(s).

In embodiments, the heterogeneous representations include a third representation, e.g., an elevation map. This map is updated at each cycle. The first and second representations are also updated at each cycle, along with the first representation and the second representation. The commands are generated repeatedly at each cycle by feeding the third representation as updated last to the third model, in addition to the updated robot's state and collision-free trajectory. The third representation is distinct from the first and second representation and can be tailored to the third model, to specifically meet the needs of the low-level policy model.

In embodiments, the first representation is a representation of a spherical ego-centric map of the environment, which allows fast inferences to be made by the first model. The second representation is a representation of an obstacle map (typically 2D or 2.5D), which consumes little bandwidth and is processed quickly, especially since the second model starts from an already reasonable trajectory. The third representation is a representation of an elevation map, preferably a 2.5D elevation map. Once a collision-free trajectory is ascertained, use can safely be made of a mere elevation map to efficiently generate low-level commands for legged locomotion. Note, any or each of the first representation, the second representation, and the third representation is optionally a learned map, represented by an artificial neural network. As a result, use can be made a lower-dimensional space representation (i.e., a compressed representation) that captures essential features of the corresponding, explicit representation in a given system coordinate, for more efficient computations.

In embodiments, the method further involves updating a root representation based on signals from the set of sensors. Each of the first, second, and third representation, is repeatedly updated based on the root representation. The root representation is preferably a representation of a sparse, 3D voxel map. Again, the root representation may optionally be a learned map represented by an artificial neural network. This root representation makes it possible to exploit any fusion technique (to aggregate all information from the various types of sensors) and ensures consistency across the heterogeneous representations subsequently generated.

In variants, at least two representations of the heterogeneous representations are updated at each cycle, based on signals from distinct subsets of the set of sensors, whereby such representations are heterogeneous perceptions of the environment. The set of sensors used to update said two representations preferably includes two or more sensors selected from a group consisting of one or more depth sensors, one or more stereo cameras, one or more time-of-flight sensors, one or more ultrasonic sensors, and one or more Lidars. In that case, additional heterogeneity is introduced, going beyond mere heterogeneous representations of a same, general perception, which benefits the safety of the generated trajectories.

In embodiments, the collision-free trajectory is obtained at a first average frequency of between 5 and 100 Hertz. The low-level commands are generated at a second average frequency of between 25 and 1 000 Hertz. The second average frequency is preferably larger than, or equal to, five times the first average frequency. The robot is controlled thanks to a motion controller operating at a third average frequency that is larger than, or equal to, the second average frequency. The third average frequency is preferably of between 125 and 10 000 Hertz. This way, exteroceptive information (which typically has high compute requirements) can be integrated at a lower frequency, while low-level control can be performed at a higher control frequency to ensure stable locomotion, it being noted that the robot state is typically updated at a higher frequency than the exteroceptive information.

In embodiments, the first model comprises an actor network, which includes a self-attention layer and an output network, the latter preferably configured as a multilayer perceptron network. The self-attention layer is connected to the output network. The second model includes one or each of a geometric obstacle detection model and a trained model, the latter preferably trained in RL. The third model includes one or each of a model predictive control model and a trained model, the latter preferably trained in RL.

In embodiments, the method further comprises a preliminary step of training the first model according to a RL framework, based on training representations of one or more training environments, where the training representations are commensurate with the first representation as used at runtime. The training further relies on rewards and states of the robot, which are computed in accordance with the training representations and actions of the robots. The rewards are preferably computed according to a function of a distance between the robot and any obstacle in the training representations and, preferably, a correct orientation of the robot towards a navigation goal.

In embodiments, the first model comprises an actor-critic network. This network includes an actor network for inferring a desired action. The actor network includes a self-attention layer and a first output network. The self-attention layer is connected to an output network, the latter preferably configured as a multilayer perceptron network. The actor-critic network further comprises a critic network for estimating a value function. The critic network includes a self-attention layer connected to a second output network; the latter preferably configured as a multilayer perceptron network. The step of training the first model includes jointly training the actor network and the critic network, for the actor network to learn to generate said initial trajectory at said each cycle at runtime. Only the actor network is used at runtime. An actor-critic architecture has advantages in terms of sample efficiency, convergence, stability, and flexibility.

The first model is preferably trained according to a proximal policy optimisation (PPO) algorithm, preferably an asymmetric PPO algorithm. In embodiments, the first model is gradually trained by gradually increasing a difficulty of terrain in the training environment and/or by changing a composition and/or scaling weights of the computed rewards.

In embodiments, the third model is a trainable model, and the method further comprises training the third model, in an interlaced manner with the first model.

According to another aspect, the invention is embodied as a robot control system for operating a legged robot. The system includes processing means, which are adapted to be interfaced with the sensors and are configured to perform algorithmic cycles, consistently with the present method. I.e., in operation, each cycle includes updating the robot's state and heterogeneous representations of its environment based on signals from the set of sensors. The representations include a first representation and a second representation, possibly a third representation, too. The processing means can generate an initial trajectory that avoids obstacles in the first representation, using a first model. The latter is a computational model trained in RL. A second model is then executed by the processing means based on the initial trajectory and the second representation as updated last to obtain a collision-free trajectory. The robot is controlled by the processing means according to commands generated from the collision-free trajectory to achieve a legged locomotion of the robot. The control system may further include the set of sensors, as well as a motion controller.

According to a final aspect, the invention is embodied as a computer program product for operating a legged robot. The computer program product comprises a computer readable storage medium having program instructions embodied therewith, the program instructions executable by the processing means of a control system as described above to cause the latter to perform steps of a method as described above.

### BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:
FIG. 1 is a 3D view of a legged robot, which includes a control system according to embodiments;
FIG. 2 is a diagram illustrating components and modules implementing high-level and low-level policy models to generate commands and achieve a legged locomotion of a robot such as shown in FIG. 1, as in embodiments. Some of the concepts shown (rewards, terminations, truncations) are only used during the training of the models;
FIG. 3 is a diagram illustrating the architecture of various models (namely a planner network, a collision detection model, and a locomotion controller network), as well as the heterogeneous representations used by such models, to obtain a collision-free trajectory, as in embodiments;
FIG. 4 is a simplified diagram of an actor-critic network used to train the planner network of FIG. 3 in reinforcement learning, as in embodiments;
FIG. 5 schematically illustrates an initial trajectory and a collision-free trajectory for a legged robot navigating around obstacles, as in embodiments;
FIG. 6 is a flowchart illustrating high-level steps of a method of operating a legged robot, according to embodiments; and
FIG. 7 schematically represents a high-level architecture of a legged robot's control system interfacing with an actuation system of a legged robot, as involved in embodiments of the invention.

The accompanying drawings show simplified representations of devices or parts thereof, as involved in embodiments. Technical features depicted in the drawings are not necessarily to scale. Similar or functionally similar elements in the figures have been allocated the same numeral references, unless otherwise indicated.

Systems, methods, and computer program products embodying the present invention will now be described, by way of non-limiting examples.

### DETAILED DESCRIPTION OF EMBODIMENTS OF THE INVENTION

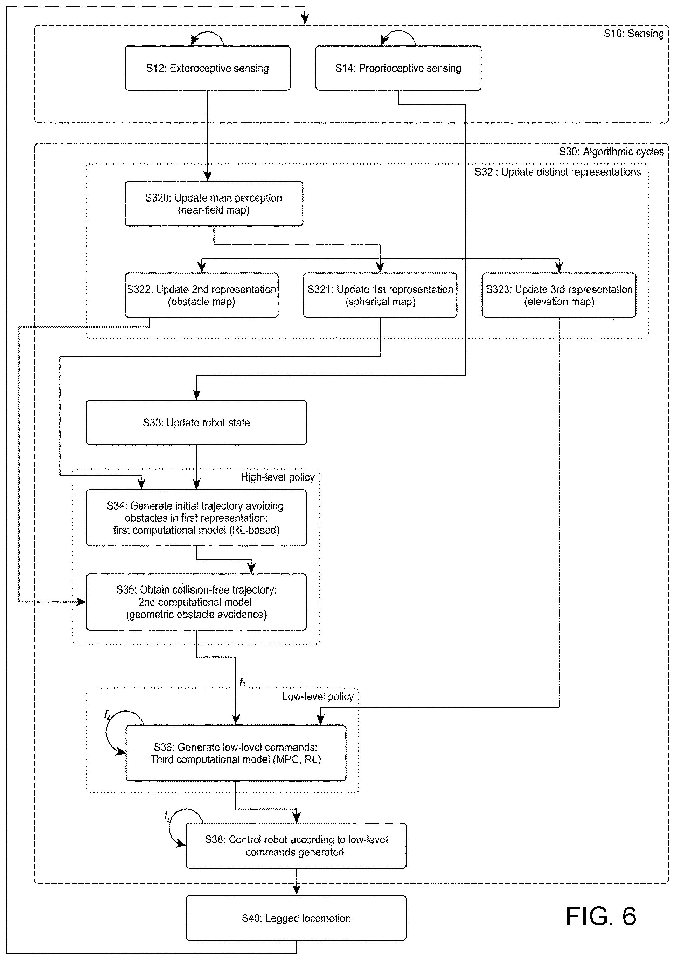

The following description is structured as follows. General embodiments and high-level variants are described in section 1. Section 2 addresses particularly preferred embodiments. Section 3 concerns technical implementation details. Note, the present method and its variants are collectively referred to as the "present methods." All references Sn refer to methods steps of the flowcharts of FIG. 6, while numeral references pertain to devices, components, and concepts involved in embodiments of the present invention.

### 1. General embodiments and high-level variants

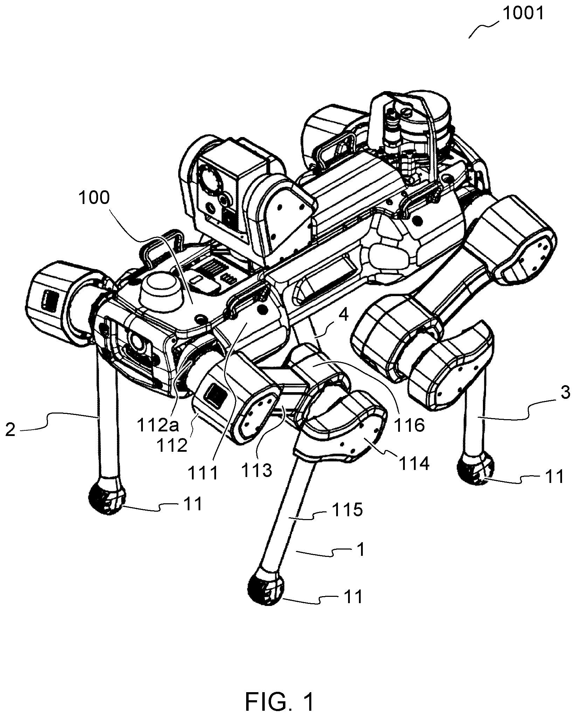

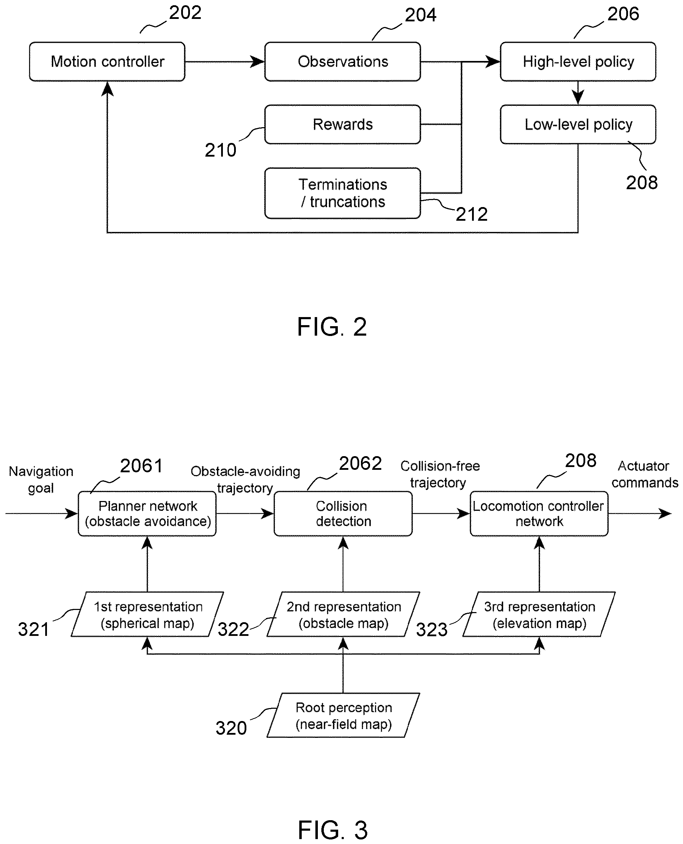

A first aspect of the invention is now described in detail, referring essentially to FIGS. 3, 5, and 6. This aspect concerns a computer-implemented method of operating a legged robot 1001, such as shown in FIG. 1. This robot typically operates in an autonomous manner at runtime. Still, the robot may also be remotely controlled during the deployment phase. Examples of such a robot are described in patent application publications WO2022/218506, WO2022/207092, WO2022/207106, WO2023/147837, WO2023/147841, and WO2023/169674.

The robot is operated by repeatedly performing S30 algorithmic cycles (i.e., steps), at the robot. Such cycles are performed by processing means of the robot. Note, an algorithmic cycle is a cycle of computations triggered by a processing unit of the robot (typically a CPU). Each algorithmic cycle requires several computation sub-cycles. Namely, each cycle comprises updating a state of the robot, as well as heterogeneous representations of the environment of the robot, generating an initial trajectory, ensuring that a collision-free trajectory is obtained based on the initial trajectory, and accordingly controlling the robot. Different models are used to generate the initial trajectory and obtain the collision-free trajectory, where such models use heterogeneous representations of the environment.

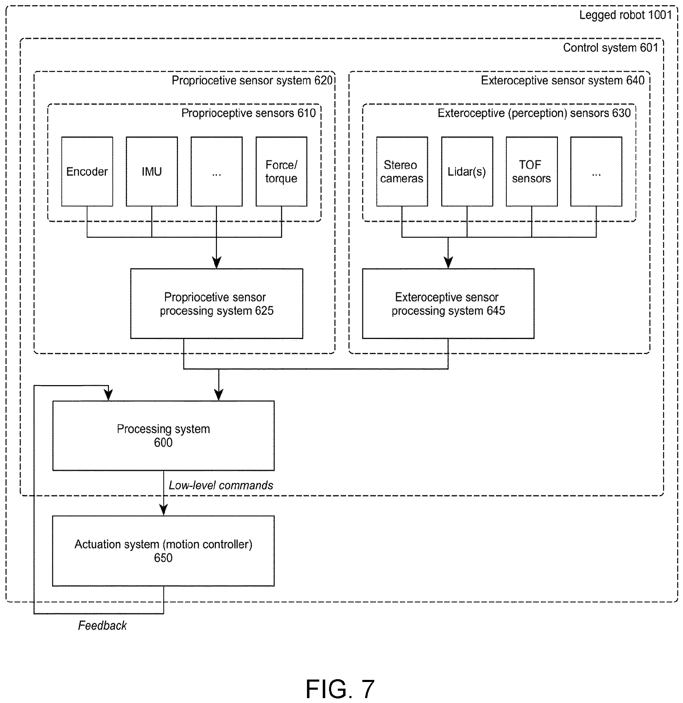

In detail, the method first updates (step S33 in FIG. 6) a state of the robot 1001, as well as a set of heterogeneous representations (steps S321 - S323) of the environment of the robot, based on signals obtained from a set of sensors 610, 630, see also FIG. 7. The heterogeneous representations include a first representation 321, such as a spherical ego-centric map, and a second representation 322, such as an obstacle map; the robot position will normally be at the centre of such maps. The representations may further include a third representation, for reasons that will become apparent later. In FIG. 6, steps S321 - S323 are performed in parallel with step S33, because the robot's state is assumed to rely on signals from the proprioceptive sensors only, whereas steps S321 - S323 only require signals from the exteroceptive sensors in this example. In variants, the robot's state update additionally relies on exteroception, and/or the representation update exploits proprioception, such that steps S33 and S321 - S323 may be interdependent. In practice, the robot's state will typically be updated S33 at a higher frequency than the representations (steps S321 - S323), meaning that each algorithmic cycle will typically include multiple robot's state updates.

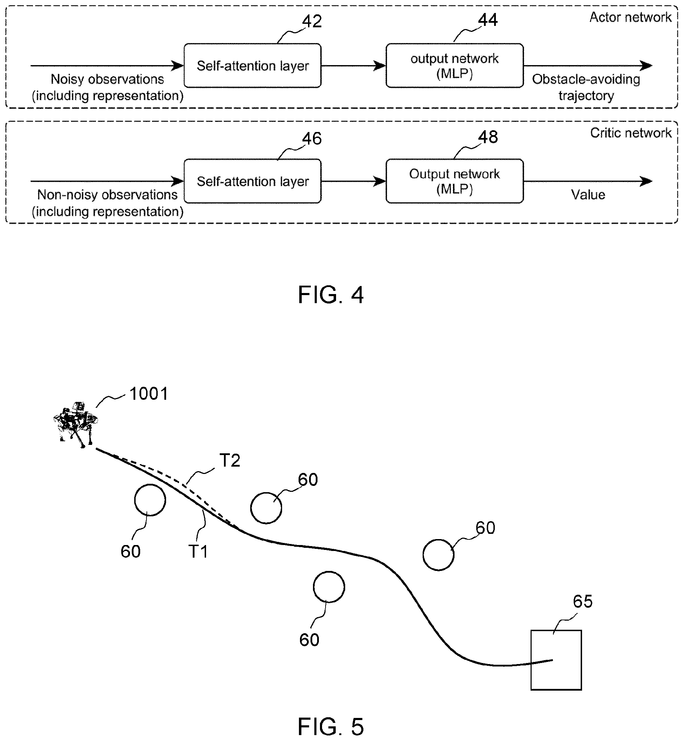

Next, the method generates (step S34) an initial trajectory T1 (see FIG. 5), which is devised so as to avoid obstacles in the first representation 321, *a priori.* This initial trajectory, which can also be referred to as an obstacle-avoiding trajectory, is generated through a first model 2061 (see FIG. 3), using the first representation 321 and the robot's state, as updated last. The first model is a computational model that is assumed to have been trained in reinforcement learning (RL), as discussed later in detail. The RL-based model 2061 may further use additional information, such as information related to timing (e.g., how much time has elapsed since the trajectory generated during the previous algorithmic cycle) and/or historic data, e.g., a history of collisions.

Remarkably, the method then executes S35 a second model 2062 (see FIG. 3) based on the initial trajectory T1, as well as the robot's state and the second representation 322 as updated last. The goal of step S35 is to obtain a collision-free trajectory T2 (see FIG. 5). I.e., compared with the first model 2061, the second model 2062 relies on a distinct algorithm and a distinct representation of the robot's environment, which improves the chance of obtaining a collision-free trajectory T2. Eventually, the robot 1001 is controlled (step S38) according to commands generated based on the collision-free trajectory T2, which causes a legged locomotion S40 of the robot. The generation of such command may include a third model, also called locomotion controller, as in embodiments discussed later.

The above method involves various concepts (e.g., sensors, representations, computational models, trajectories, and commands), which are discussed in detail in the following.

**Sensors and sensor systems.** The legged robot is equipped with a set of sensors 610, 630 (FIG. 7), which typically form part of several sensory systems 620, 640. Such systems may notably include a proprioceptive system 620 (including proprioceptive sensors 610) and an exteroceptive system 640, i.e., an environmental perception system, which includes one or more exteroceptive sensors 630. The latter preferably include distinct types of sensors, i.e., heterogeneous sensors.

Proprioceptive sensors 610 typically include joint encoders, inertial measurement units, and/or pressure sensors. Such sensors, which are known as such, typically allow joint positions, velocities, torques and, in turn, states of the robot, to be estimated by a state estimator. The updated states of the robots typically include the position, linear velocities, orientation, and angular velocities, of the robot. As noted earlier, the robot's state is typically derived from proprioception only, although it may possibly use exteroceptive information, too. In particularly preferred embodiments, the robot's state is defined by the state of the main body (the torso, i.e., anything but the legs of the robot), that is, a 6D pose (position, orientation), a 6D twist (linear, angular velocities (i.e., *νₓ*, *ν_{y}, ν_{z}, ωₓ, ω_{y}, ω_{z}*)), which notably determines the propensity of the robot to twist. Note, the 6D velocity may possibly be restricted to 3D velocities (e.g., *νₓ*, *ν_{y}, ω_{z}*). The robot's state is further defined by a state of joints (e.g., 12 positions, 12 velocities) and may additionally be computed based on contact states, themselves derived from torque information, e.g., obtained through 12 joint torques. The locomotion controller typically uses a 3D or 6D twist (linear and angular velocities) and/or a 3D or 6D pose (position, orientation) of the main body of the robot as input.

The exteroceptive sensors 630 make it possible to perceive surroundings of the robot. Exteroceptive sensors yield sensory information that is used to create one or more perception models of the robot's surroundings. Preferably, use is made of one or more stereo cameras, depth sensors, time-of-flight sensors, ultrasonic sensors, and/or Lidars, which sensors are known as such. For example, Lidars give rise to point clouds. Stereo cameras make it possible to generate depth images, which can be converted into point clouds, too, if necessary.

In operation, the environment of the robot is continually sensed, meaning that the sensing operations are either repeatedly and/or continuously performed, thanks to the set of sensors. For example, a Lidar may repeatedly scan the environment of the robot. In addition, continuous operations may be performed by analogue sensors, if any. For example, depth sensors and stereo cameras can be regarded as continuously sensing the environment, even though the digital images eventually obtained are discrete events.

**Representations.** Information obtained from the exteroceptive sensors can be further processed by the perception system (e.g., by the exteroceptive sensor processing system 645, using fusion techniques) to update representations of the environment. Preferably, a root (or main) representation is captured as a near-field map, e.g., in the form of a sparse voxel 3D map. This representation may also be a learned map represented by an artificial neural network (ANN). Based on this representation, heterogeneous representations can then be computed and updated, starting with a spherical map and an obstacle map. The spherical map is used by the first model 2061, i.e., a trajectory planner, also called planner network in FIG. 3, which is designed to output obstacle-avoiding trajectories. The spherical map is an egocentric map, centred on the robot. The obstacle map may for instance be a 2D occupancy map, in which obstacles are explicitly identified as such for collision detection purposes. It is used by the second model 2062, which can be regarded as a collision-avoidance model or collision detection model; it is referred to as "collision detection" in FIG. 3. The second model 2062 may be based on a geometric and/or semantic detection model. In addition, an elevation map (e.g., a 2.5D height map) may be used by a lower-level policy model 208 to generate low-level commands and actuate the robot, as in embodiments discussed below. Since the sensors used are onboard sensors, the representations generated reflect a viewpoint of the robot. The resulting maps are typically egocentric maps; the robot is located at the centre of such maps.

All representations involved herein (including the root representation, if any, and the heterogeneous representations) may be formed as explicit representations in given coordinate systems of given dimensions (e.g., a 2D, 2.5D, or 3D). In preferred variants, some or all of these representations are learned maps, represented by respective ANNs, as opposed to explicit representations. In that case, instead of using an explicit 2D, 2.5D, or 3D representation, use can be made of a latent space representation (a lower-dimensional space representation), which captures essential features of the corresponding explicit representation. That is, a compressed representation is used as input to a computational model, for more efficient computations.

In all cases, the first, second, and third representations are heterogeneous representations, which have a different character; they are of different kinds (e.g., spherical map, obstacle map, elevation map) and/or have different dimensionality (e.g., 3D, 2D, 2.5D). As a result, the heterogeneous representations represent different contents or, at least, represent contents in different ways (e.g., in spaces of different dimensions). Relying on heterogeneous representations benefit the trajectories, eventually, as further discussed later.

**Models.** Various models are involved. Such models are computational models, which include learned models (i.e., models trained using machine learning, as with the first model) and may further include other types of models, e.g., models relying on model predictive control (MPC) and/or geometric obstacle detection. Such models are implemented by computerised modules, executing on same or distinct processing means, this depending on the processing capability of the underlying processing means 600 and the safety level desired.

Each of the first and second model relies on a respective representation of the environment and a state of the robot as computed last. Preferably, one or each of the first and second models relies on a history of states. In this case, the model not only uses the robot's state and a representation but, in addition, one or more previous states of the robot, i.e., states as previously updated during previous algorithmic cycles.

**First model and initial trajectory (obstacle-avoiding trajectory).** The first model 2061 is a model trained in RL. This model generates an initial trajectory T1, which is meant to avoid potential obstacles as they appear (or are encoded) in the first representation 321. That is, this initial trajectory is generated so as to avoid potential obstacles, *a priori.* The initial trajectory typically includes one or more velocities (e.g., forward, lateral, and angular velocities) and may further include positions and orientations. Each initial trajectory, as generated at each algorithmic cycle, corresponds to a path segment, as opposed to a global path, which may be defined by a global planner. That is, the first model typically acts as a local planner. A global planner may additionally be involved, to provide a waypoint path to the first model. I.e., the first model may require, in addition to the robot's states and the first representation, a navigation goal (e.g., a target position and yaw angle) as input. In variants, the navigation goal may be computed on-the-fly, whether by the first model or another module, given higher-level instructions.

**Second model and substitute trajectory.** The second model is a collision avoidance (or collision detection) model, which relies on a representation that differs from the representation used by the first model. It further uses an algorithm that differs from the algorithm of the first model. Such differences are exploited to allow the second model to safeguard outputs from the first model. In detail, the second model 2062 uses the initial trajectory, the robot's states, and the second representation 322 as updated last, where the second representation 322 conceptually differs from the first representation 321. As said, the first representation may for instance be a 3D representation (e.g., a spherical ego-centric map), while the second representation can for example be a 2D or 2.5D representation (e.g., an obstacle map).

In embodiments, the second model 2062 acts as safety layer. I.e., it performs checks to verify whether the initial trajectory T1 is collision-free. In detail, the second model checks whether following the initial trajectory leads to a collision, particularly between the torso (or main body) and obstacles in the environment. If the second model detects a risk of collision, it provides a substitute trajectory T2, which is collision-free, in accordance with the second representation. The second model may for instance cause the robot to decelerate when getting too close to an obstacle, or otherwise modify the initial trajectory T1 to avoid a collision with an obstacle delineated (or encoded) in the second representation. The second model may further prevent the robot from getting too far from an initially path or goal, as in preferred embodiments.

The substitute trajectory T2 is then used in place of the initial trajectory T1 in the subsequent steps (see FIGS. 5 and 6), to generate commands and accordingly control the robot. If no risk of collision is detected by the second model, the initial trajectory T1 can be used in the subsequent steps.

The second model preferably includes a geometric obstacle avoidance model, although it may further include a trained model to infer corrected trajectories. This additional trained model may for instance be trained in RL, like the first model. The substitute trajectory T2 may thus possibly be inferred, using a trained model, when necessary, e.g., when a substantial risk of collision is detected. In variants, the second model systematically replaces the initial trajectory T1, e.g., by systematically inferring a new trajectory T2 at each cycle, based on the robot's states and the second representation 322, where the trajectory T2 inferred may possibly be equal to the initial trajectory T1 used as input. In all cases, the trajectory eventually obtained is a collision-free trajectory.

Note, the trajectory generated by the second model may also amount to stopping the robot, regardless of other potential emergency stop procedures that may be implemented by additional modules. I.e., one or more additional modules may be provided, e.g., to stop and deactivate the robot, should any failure or dangerous situation be detected.

**Commands.** The commands eventually generated are commands for actuators and/or motors, which cause a legged locomotion of the robot. Practically speaking, this locomotion is determined by a series of commands for respective actuators (electromechanical actuators) and/or motors of the robots and for successive time points. In practice, such commands may define desired joint positions, velocities, and/or torques. In particular, the robot may contain a plurality of individual motors, which generate currents to follow the defined commands, thereby causing the legged locomotion of the robot.

The generated commands are preferably meant to be immediately executed, i.e., as soon as possible after their generation. The execution of the commands by the actuators/motors results in actuating the robot in accordance with the planned locomotion. This locomotion typically includes moving and twisting manoeuvrers.

As explained above, the present approach relies on heterogeneous representations obtained by the perception system, which trajectories are used by distinct models to perform different functions. Traditional methods rely instead on algorithms based on graph search, sampling, interpolating curves, or reaction to generate a path around an obstacle. Such algorithms are computationally demanding. On the contrary, in the present context, the first model (trained in RL) can perform fast inferences, which produce an initial trajectory at each cycle. This trajectory can then be efficiently safeguarded by the second model, using a representation that differs from the representation used by the first model. The algorithms of the first and second model differ too (if only because different representations are used as input), for safety and efficiency reasons. Importantly, this safeguard mechanism is efficient, too, given that the second model starts from a reasonable trajectory (the initial trajectory) and not from scratch- the present approach differs from a fully redundant approach.

Thus, different representations of the environment and different algorithms are used by the two models, which not only ensure some heterogeneity in the trajectory verification procedure but, in addition, allow some optimisation. I.e., each representation can be specifically adapted to the function performed by the corresponding model. For example, the first model may rely on a spherical map to efficiently infer the initial trajectory, while data extracted from a 2D obstacle map are sufficient for the second model to obtain a collision-free trajectory T2, which speeds up computations. Meanwhile, the heterogeneity of the verification scheme increases safety and eventually benefits the trajectories generated. I.e., the second model makes it possible to mitigate the risk of collision. Still, compared with a fully redundant verification scheme, the present approach does not necessarily require additional processors and additional sensors. I.e., given a set of exteroceptive sensors, heterogeneous representations of the perception formed are used by the first and second model. To summarise, relying on heterogeneous representations is both computationally more efficient at runtime, inasmuch as the representations used can be tailored for the two models, and also increases safety.

All this is now described in detail, in reference to particular embodiments of the invention. To start with, the first model 2061 and the second model 2062 preferably form part of a high-level policy model 206, while a low-level policy model (i.e., a third model) is used to generate (step S36, FIG. 6) the commands at each cycle. The main function of the low-level policy model is to follow the collision-free trajectory and ensure a correct, corresponding foot placement. The low-level policy model can thus be regarded as a locomotion planner (referred to as a locomotion controller network in FIG. 3). As noted earlier, the third model 208 is preferably based on MPC and/or includes a trained model, such as a model trained in RL. In embodiments, the low-level model is a composite computational model, which relies on both MPC and machine learning.

Practically speaking, the commands are generated S36 by feeding the collision-free trajectory T2, as well as the robot's state and one of the heterogeneous representations 321 - 323 as updated last, to the low-level policy model 208. In other words, the high-level policy model 206 is cascaded with the low-level policy model 208, to produce commands from trajectories.

The third model repeatedly generates the commands as low-level commands and, this, at each cycle. As a result, the low-level commands are generated S36 at an average frequency *ƒ*₂ that is higher than the average frequency *f*₁ at which the collision-free trajectory is obtained by the high-level policy model, it being noted that the different intermediate outputs address different planning horizons. Balancing and stabilising the robot will typically require faster responses than planning a path with a larger travelling. Moreover, the size and definitions used for the first and second representations may have higher compute requirements. For completeness, performing the high-level planning at a lower frequency than the low-level planner allows locomotion to be decoupled from collision-free trajectory computation. For instance, in embodiments, the collision-free trajectory T2 is obtained at an average frequency *f*₁ of between 5 and 100 Hz (preferably *f*₁ ≥ 10 Hz), while the low-level commands are generated at an average frequency *ƒ*₂ of between 25 and 1 000 Hz (preferably *ƒ*₂ ≥ 50 Hz). Meanwhile, the robot 1001 is controlled thanks to a motion controller operating at an average frequency *ƒ*₃, e.g., of between 125 and 100 000 Hz, more preferably of between 125 and 10 000 Hz, where *f*₃ ≥ *f*₂*.* The frequency *f*₂ is preferably constrained so that *f*₂ ≥ 5 × *f*₁, which enables optimal usage of computational resources on the robot.

The present inventors have realised that it is computationally more effective to plan a high-level initial trajectory (first model) at a relatively low frequency, revise this trajectory at the same frequency (second model) to ensure a collision-free trajectory, and then repeatedly generate low-level commands at a higher frequency, rather than directly optimising commands at the higher frequency fulfilling all constraints. This, in practice, allows faster computation cycles, such that the above solution can, notwithstanding its complexity, be more tractably implemented in real-time by a control system of a legged robot, using conventional hardware i.e., CPUs and, if necessary, GPUs.

In embodiments, the heterogeneous representations of the sensed environment further include a third representation 323, such as an elevation map, which is updated S323 at said each cycle along with the first representation 321 and the second representation 322. The commands are repeatedly generated S36 at each cycle by feeding the third representation 323 as updated last to the third model 208, in addition to the updated state of the robot and the collision-free trajectory T2. This representation is distinct from the first and second representation. It can be designed to specifically meet the needs of the low-level policy model 208.

In particularly preferred embodiments, the first representation 321 is a representation of a spherical ego-centric map of the environment, the second representation 322 is a representation of an obstacle map, and the third representation 323 is a representation of an elevation map, preferably a 2.5D elevation map. As said, each of the first, second, and third representations can be a learned map. A particularly efficient approach to represent the environment (including obstacles therein) is to generate, and then repeatedly update, a spherical ego-centric geometric map, which is obtained from signals from depth sensors, stereo cameras, Lidars, time-of-flight (TOF) sensors, and/or ultrasonics sensors. Relying on such a spherical map allows fast inferences by the first model. Meanwhile, a distinct representation (an obstacle map) is used by the second model (also called safety layer herein). This obstacle map can also be obtained based on signals from depth sensors, stereo cameras, Lidars, TOF sensors, and/or ultrasonics sensors. Still, heterogeneous representations of the environment are relied, which mitigates the risk of collision. The elevation map 323 is specifically adapted to the locomotion planner. The elevation map as fed to the low-level policy model may be further processed by the low-level policy model, if necessary.

Even though the representations 321 - 323 are heterogeneous representations, they may possibly be obtained from a same root (or main) representation, as in preferred embodiments. For example, referring to FIGS. 3 and 6, the method may repeatedly update S320 a root representation 320 based on signals obtained from the set of sensors 610, 630, whereby each of the first representation 321, the second representation 322, and the third representation 323, is repeatedly updated S32 based on the root representation 320. This ensures consistency across the heterogeneous representations subsequently generated. The root representation 320 is preferably a representation of a sparse, 3D voxel map. Again, the root representation may be a learned map, whereby a latent representation may be fed to the higher-level policy model for it to accordingly generate a spherical ego-centric map and an obstacle map representation. That is, use can be made of a latent representation of the root representation to infer each representation 321, 322, 323, whether as explicit or latent space representations. In all cases, the representations 321, 322, 323 may be generated based on data contained in the root representation.

In variants to using single root representations, at least two representations of the set 321, 322, 323 are updated S32 at each cycle, based on signals from distinct subsets of the set of sensors 630. In that case, the resulting representations reflect true heterogeneous perceptions of the environment. Such perceptions can be used to infer trajectories and then verify such trajectories, prior to generating low-level commands. For example, the first representation 321 and the second representation 322 are obtained based on signals from the Lidar(s) and depth sensors (and/or stereo cameras), whereas the second representation 322 is obtained based on signals from the sole depth sensors and/or stereo cameras, but not from the Lidars. Thus, additional heterogeneity is introduced, going beyond mere heterogeneous representations of a same, general perception, which benefits the safety of the generated trajectories.

Referring back to FIG. 2, the method may further include a preliminary step of training the first model 2061 according to a RL framework. As seen in FIG. 4, first model 2061 may include an actor-critic network 42 - 48. I.e., an actor network interacts with a critic network for training purposes, whereas only the actor network is used at runtime, for inference purposes. The actor network 42, 44 is used to infer a desired action. It includes a self-attention layer 42 and a first output network 44, where the layer 42 is connected to the network 44 and the network 44 is preferably configured as a multilayer perceptron (MLP) network. The critic network 46, 48 is used for estimating a value function. It includes a self-attention layer 46 connected to a second output network 48, again preferably configured as an MLP network. The first model 2061 is trained by jointly training the actor network 42, 44 and the critic network 46, 48, for the actor network to learn to generate an initial trajectory T1 at each algorithmic cycle at runtime. An actor-critic architecture has advantages in terms of sample efficiency, convergence, stability, and flexibility.

The training of the first model 2061 makes use of representations of training environments, which are commensurate (i.e., consistent) with the representation 321 used for inference purposes. The RL training further relies on rewards 210 and states of the robot 1001, which are computed in accordance with the training environments and actions of the robot. For instance, the rewards may be computed according to a function of the distance between the robot and any obstacle in the training representations. In addition, the training may reward a correct orientation of the robot 1001 towards the navigation goal. The training representations and states form part of the "observations" 204 fed to the policy models in FIG. 2.

In preferred embodiments, the first model 2061 is trained according to a proximal policy optimisation (PPO) algorithm, preferably an asymmetric PPO algorithm. Using asymmetric PPO heavily reduces the training time as the critic network gets observations without noise, this circumventing the need to perform a distillation of the network into a student model following the training of the first model. PPO algorithms are known *per se.* No termination is necessarily needed for the training, but conditions can be used for truncation of episodes, e.g., the robot falls down and/or a timer has run out. Preferred is to rely on curriculum learning, whereby the first model 2061 is gradually trained by gradually increasing a difficulty of terrain in the training environment and/or by changing a composition and/or scaling weights of the computed rewards (reward curriculum).

The second model 2062 may for instance be a geometric obstacle detection model and/or a trained model, e.g., a model trained in RL. The third model 208 preferably includes an MPC model and a trained model (e.g., trained in RL). When the third model 208 is a trainable model, the third model can be trained in an interlaced manner with the high-level policy model, in particular the first model 2061. For example, one may train the low-level policy model 208 for it to learn generating low-level actuator/motor commands based on learned trajectories, freeze the low-level policy model, and then train the high-level model using the frozen, low-level model, for the high-level policy model 206 to learn to generate trajectories based on rewards and states of the robot. Such steps are repeated, whereby the low-level model is unfrozen to further learn generating low-level commands based on the learned trajectories, and so on.

Referring to FIG. 7, another aspect of the invention concerns a robot control system 601 for operating a legged robot 1001. The system comprises processing means 600, which can be interfaced with a set of sensors, e.g., proprioceptive sensors 610 and exteroceptive sensors 630, as described earlier. The processing means 600 may for instance comprise one or more processors, e.g., a CPU, as well as one or more GPUs, reading from and writing to the main memory. The robot may further include a persistent storage, which stores computerised methods as described earlier in the form of software instructions. The processing means 600 interface with the sensors, so as to be able to process signals obtained from such sensors.

The control system 601 may be regarded as including the set of sensors, as assumed in FIG. 7. In this example, the control system 601 includes distinct sensor systems 620, 640, i.e., a proprioceptive sensor system 620 and an exteroceptive sensor system 640, in addition to the processing system 600. The sensor systems 620, 640 have their own processing systems 625, 645, to pre-process sensor signals coming from the sensors. That is, the signals transmitted by the sensors are pre-processed by respective sensor processing systems 625, 645 before being passed to the processing means 600. Beyond the processing means 600 and sensor systems 620, 640, the control system may also integrate the actuation system 650, which notably comprises a motion controller 202 (FIG. 2) and actuators and/or motors.

The processing means 600 are configured to repeatedly perform algorithmic cycles at the robot, wherein each cycle of the algorithmic cycles comprises steps as described in reference to the first aspect of the invention. Once loaded in the main memory, the software instructions cause the processor(s) to process data and thereby perform method steps as described in reference to the present methods. Such steps result in generating commands, which are transmitted to the actuation system 650 and, in particular, the motion controller 202. The transmitted commands may then be dispatched by the actuation system 650 to individual actuators and/or motors, e.g., motors that generate currents to follow the defined commands. This makes it possible to control the robot according to commands generated based on the collision-free trajectory T2 and cause a legged locomotion of the robot 1001. The transmitted commands may be further processed by the actuation system 650, if necessary, before being dispatched to the actuators and/or motors.

A final aspect of the invention concerns a computer program product. This product comprises a computer readable storage medium, which includes program instructions. The program instructions are executable by processing means, e.g., of a control system as described above, to cause to perform steps as described earlier in reference to the present methods. Section 3 provides additional implementation details related to computer program products and robot control systems.

The above embodiments have been succinctly described in reference to the accompanying drawings and may accommodate a number of variants. Several combinations of the above features may be contemplated. Examples are given in the next section.

### 2. Particularly preferred embodiments

The following describes particularly preferred embodiments as captured in the accompanying drawings.

FIG. 1 shows a legged robot 1001 with legs 1 - 4, configured so that the robot can walk over the ground. In particular, the legs can move in a synchronised manner to allow an animal-like locomotion of the robot over the ground. Each leg 1 - 4 is equipped with a respective electrostatic discharge assembly, each comprising a respective electrostatic discharge foot 11. In operation of the legged robot, each of the electrostatic feet 11 touches the ground at least once during each walking cycle, to electrostatically discharge an electrostatic chargeable component. Each leg comprises a hip abduction/adduction actuator 111, which connects to the robot torso and to a hip flexion/extension joint 112a, itself connecting to a hip flexion/extension actuator 112. The latter connects to an upper leg 113, itself connected to a knee flexion/extension actuator 116. The latter connects to shank 114, itself connected to a shank tube 115, which is connected to the electrostatic discharge foot 11, possibly via an adapter.

FIG. 2 shows components used to enable a legged locomotion of the robot. Such components include a motion controller 202, which causes the robot to move in response to commands received from the low-level policy 208. As explained in section 1, the high-level policy 206 produces collision-free trajectories (in two steps, via distinct models and distinct representations), which the low-level policy 208 turns into low-level commands, themselves transmitted to the motion controller 202. Observations 204 include states of the robot and representations of the environment, which are computed based on signals obtained from proprioceptive and exteroceptive sensors. The observations can be simulated for training purposes. When training the high- and low-level policy models, observations are fed to the high-level policy 206, along with rewards 210 and terminations 212.

FIG. 3 illustrates a preferred model architecture, i.e., a planner network 2061, a geometric obstacle detection model 2062, and a locomotion controller network 208. The planner network 2061 and the geometric obstacle detection model 2062 make up the high-level policy model. The models 2061, 2062 use heterogeneous representations (i.e., a spherical map 321 and an obstacle map 322) to obtain a collision-free trajectory. The spherical map helps the planner network 2061 understand the robot's surroundings in a comprehensive manner, to generate an initial trajectory avoiding obstacles in the spherical map, *a priori.* The obstacle map aids the geometric obstacle detection model 2062 in detecting and evaluating obstacles within the robot's path, based on which the model 2062 makes sure to obtain a collision-free trajectory. If necessary, the initial commands are adjusted to avoid collisions. The elevation map representation provides information about the terrain's elevation changes, based on which low-level commands are generated by the locomotion controller network 208. All representations are obtained from a root representation, i.e., a near-field map 320. The latter serves as a foundational perception, which is the primary source of environmental data for the representations 321, 322, and 323. Still, the heterogeneity of the representations allows safer trajectories and commands to be generated.

FIG. 4 shows an actor-critic network. The actor network processes noisy observations (including first representations) and generates (obstacle-avoiding) trajectories, while the critic network processes non-noisy observations (including first representations). The actor network and the critic network operate in tandem during the learning phase to learn to control the legged robot's movements. The noisy observations serve as the input for the actor network. The self-attention layer 42 receives this input and applies attention mechanisms to focus on relevant features. The output MLP 44 processes features identified by the self-attention layer 42 to compute trajectories (both during the inference phase and training phases). During the training, non-noisy observations feed into the critic network, offering a cleaner set of data for evaluation. The self-attention layer 46 receives such observations and applies attention mechanisms to identify significant features. The output MLP 48 takes data obtained from the self-attention layer 46 to calculate a value, which represents an assessment of the current action's quality given the current state, guiding the legged robot's decision-making process. The trajectories from the actor network determine immediate actions, while the values from the critic network evaluate potential outcomes, ensuring that the legged robot operates effectively within the environment.

FIG. 5 shows a legged robot 1001 navigating from a starting point to a goal 65 while avoiding obstacles 60. The figure illustrates two trajectories: an initial trajectory T1 and a collision-free trajectory T2. Obstacles 60 represent physical impediments that the legged robot 1001 must navigate around. The presence of obstacles 60 may require the legged robot 1001 to alter its course from the initial trajectory T1 to the collision-free trajectory T2. I.e., the legged robot 1001 begins movement following the initial trajectory T1, which is then adjusted to the collision-free trajectory T2 to circumvent the obstacles 60 and reach the goal 65.

FIG. 6 illustrates a method for controlling a legged robot, comprising a series of steps aimed at controlling the robot. Sensing steps S10 (i.e., exteroceptive sensing S12 and proprioceptive sensing S14 steps) are continually performed. Signals obtained from exteroceptive sensors are used to update the main (root) perception at step S320. This, in turn, causes to update S32 the heterogeneous representations, namely the first, second, and third representations, see steps S321 - S323. Meanwhile, proprioceptive signals are used to update S33 the robot's state. The first representation and robot's state are used at step S34 by the first model to generate an initial trajectory, from which a collision-free trajectory is obtained by the second model at step S35. Collision-free trajectories are obtained at a frequency *f*₁. Low-level commands are generated at step S36 to control the robot, step S38, and accordingly cause legged locomotion, step S40. Low-level commands are generated at a frequency *f*₂ > *f*₁, while the motion controller operates at a larger frequency *f*₃ > *f*₂*.*

FIG. 7 illustrates an embodiment of a control system 601 of the robot 1001. The control system 601 comprises proprioceptive sensors 610, exteroceptive (perception) sensors 630, which form part of respective sensor systems 620, 640. Signals obtained are first processed by respective sensor processing systems 625, 645, which fuse data obtained from their respective sensor systems 620, 640, before passing fused data to the processing system 600 (i.e., a CPU). The processing system 600 may perform further fusion operations, if necessary, and may offload matrix-vector operations to a nearby GPU, so as to accelerate inferences from any machine learning-based model. The processing system 600 computes commands for the actuation system 650, which notably includes a motion controller 202, as discussed earlier. In variants, each processing system 625, 645 may further use signals from the other sensor systems 640, 620 (or a subset of sensors thereof), and fuse data obtained from the two sensor systems 620, 640, before passing fused data to the processing system 600.

### 3. Technical implementation details

Computerised devices can be suitably designed for implementing embodiments of the present invention as described herein. In that respect, it can be appreciated that the methods described herein are non-interactive, i.e., automated, although human input may be required in certain cases, e.g., should an anomaly or emergency be detected or during a deployment phase of the robot. Automated parts of such methods can be implemented in software, hardware, or a combination thereof. In exemplary embodiments, automated parts of the methods described herein are implemented in software, as a service or an executable program (e.g., an application), the latter executed by suitable digital processing devices.

In the present context, each processing system is preferably mapped onto one or more respective sets of processors or, even, one or more respective computers. In particular, the system 601 may typically involve several processors or computers.

A suitable computer will typically include at least one processor and a memory (possibly several memory units) coupled to one or memory controllers. Each processor is a hardware device for executing software. The processor, which may in fact comprise one or more processing units (e.g., processor cores), can be any custom made or commercially available processor, possibly subject to some certification.

The memory typically includes a combination of volatile memory elements (e.g., random access memory) and non-volatile memory elements, e.g., a solid-state device. The software in memory may include one or more separate programs, each of which comprises an ordered listing of executable instructions for implementing logical functions. The software in the memory captures methods described herein in accordance with exemplary embodiments, as well as a suitable operating system (OS). The OS essentially controls the execution of other computer (application) programs and provides scheduling, input-output control, file and data management, memory management, and communication control and related services. It may further control the distribution of tasks to be performed by the processors. The methods described herein shall typically be in the form of executable program, script, or, more generally, any form of executable instructions.

In exemplary embodiments, each computer further includes a network interface or a transceiver for coupling to a network (not shown). In addition, each computer will typically include one or more input and/or output devices (or peripherals) that are communicatively coupled via a local input/output controller. A system bus interfaces all components. Further, the local interface may include address, control, and/or data connections to enable appropriate communications among the aforementioned components. The I/O controller may have additional elements, which are omitted for simplicity, such as controllers, buffers (caches), drivers, repeaters, and receivers, to allow data communication.

When a computer is in operation, one or more processing units executes software stored within the memory of the computer, to communicate data to and from the memory and/or the storage unit (e.g., a solid-state memory), and to generally control operations pursuant to software instruction. The methods described herein and the OS, in whole or in part are read by the processing elements, typically buffered therein, and then executed. When the methods described herein are implemented in software, the methods can be stored on any computer readable medium for use by or in connection with any computer related system or method.

Computer readable program instructions described herein can be downloaded to processing elements from a computer readable storage medium, via a network, for example, the Internet and/or a wireless network. A network adapter card or network interface may receive computer readable program instructions from the network and forward such instructions for storage in a computer readable storage medium interfaced with the processing means. All computers and processors involved can be synchronised using any suitable protocol or thanks to timeout messages.

Aspects of the present invention are described herein notably with reference to a flowchart and a block diagram. It will be understood that each block, or combinations of blocks, of the flowchart and the block diagram can be implemented by computer readable program instructions.

These computer readable program instructions may be provided to one or more processing elements as described above, to produce a machine, such that the instructions, which execute via the one or more processing elements create means for implementing the functions or acts specified in the block or blocks of the flowchart and the block diagram. These computer readable program instructions may also be stored in a computer readable storage medium.

The flowchart and the block diagram in the accompanying drawings illustrate the architecture, functionality, and operation of possible implementations of the computerised systems, methods of operating it, and computer program products according to various embodiments of the present invention. Note that each computer-implemented block in the flowchart or the block diagram may represent a module, or a portion of instructions, which comprises executable instructions for implementing the functions or acts specified therein. In variants, the functions or acts mentioned in the blocks may occur out of the order specified in the figures. For example, two blocks shown in succession may actually be executed in parallel, concurrently, or still in a reverse order, depending on the functions involved and the algorithm optimisation retained. It is also reminded that each block and combinations thereof can be adequately distributed among special purpose hardware components.

While the present invention has been described with reference to a limited number of embodiments, variants, and the accompanying drawings, it will be understood by those skilled in the art that various changes may be made, and equivalents may be substituted without departing from the scope of the present invention. In particular, a feature (device-like or method-like) recited in a given embodiment, variant or shown in a drawing may be combined with or replace another feature in another embodiment, variant, or drawing, without departing from the scope of the present invention. Various combinations of the features described in respect of any of the above embodiments or variants may accordingly be contemplated, that remain within the scope of the appended claims. In addition, many minor modifications may be made to adapt a particular situation or material to the teachings of the present invention without departing from its scope. Therefore, it is intended that the present invention is not limited to the particular embodiments disclosed, but that the present invention will include all embodiments falling within the scope of the appended claims. In addition, many other variants than explicitly touched above can be contemplated. For example, several architecture variants may be contemplated for the processing system 601, which involves one or more distinct computers. In addition, various other machine learning techniques and computational models may possibly be relied on, such as transformers, foundation models, Visual-Language-Action (VLA) models, general-purpose AI, artificial general intelligence.

### REFERENCE LIST

| | | | |
|---|---|---|---|
| 1 - 4 | Robot's legs | 212 | Terminations |
| 11 | electrostatic discharge feet | 320 | Root representation (near-field map) |
| 42, 44 | Actor network | | |
| 42 | Self-attention layer (actor network) | 321 | First representation (spherical map) |
| 44 | Output network (actor network) | 322 | map)Second representation (obstacle |
| 46, 48 | Critic Network | 323 | Third representation (elevation map) |
| 46 | Self-attention layer (critic network) | | |
| 48 | Output network (critic network) | 600 | Processing Means |
| 60 | Obstacles | 601 | Robot control system |
| 65 | Navigation goal | 610 | Proprioceptive sensors |
| 100 | Electrostatic chargeable component | 620 | Proprioceptive sensor system |
| 111 | Hip abduction/adduction actuator | 625 | Proprioceptive sensor processing system |
| 112 | Hip flexion/extension actuator | | |
| 112a | Hip flexion/extension joint | 630 | Exteroceptive sensors |
| 113 | Upper leg | 640 | Exteroceptive sensor system |
| 114 | Shank | 645 | Exteroceptive sensor processing system |
| 115 | Shank tube | | |
| 116 | Knee flexion/extension actuator | 650 | Actuation system (with motion controller) |
| 202 | Motion controller | | |
| 204 | Observations (states and maps) | 1001 | Legged Robot |
| 206 | High-level policy model | 2061 | First model (planner network) |
| 208 | Low-level policy model (third model,locomotion controller network) | 2062 | Second model (geometric obstacle detection model) |
| 210 | Rewards | T1 | Initial trajectory |
| | | T2 | Collision-free trajectory |

## Claims

1. A computer-implemented method of operating a legged robot (1001), wherein the method comprises repeatedly performing (S30) algorithmic cycles at the robot, and wherein each cycle of the algorithmic cycles comprises:
updating (S33, S321 - S323) a state of the robot (1001) as well as heterogeneous representations of an environment of the robot based on signals from a set (610, 630) of sensors, the heterogeneous representations including
a first representation (321), such as a spherical ego-centric map, and
a second representation (322), such as an obstacle map;
generating (S34) an initial trajectory (T1) that avoids obstacles in the first representation (321), wherein the initial trajectory is generated through a first model (2061) based on the first representation (321) and the state as updated last, the first model trained in reinforcement learning;
executing (S35) a second model (2062) based on the initial trajectory (T1), as well as the state and the second representation (322) as updated last, to obtain a collision-free trajectory (T2); and
controlling (S38) the robot (1001) according to commands generated based on the collision-free trajectory (T2) to cause a legged locomotion (S40) of the robot.

2. The computer-implemented method according to claim **1,** wherein
the first model (2061) and the second model (2062) form part of a high-level policy model (206), and
the method further comprises, at said each cycle, generating (S36) said commands by feeding the collision-free trajectory (T2), the state of the robot, and one of the heterogeneous representations (321 - 323) as updated last, to a third model (208), which is a low-level policy model, for the third model to repeatedly generate the commands as low-level commands, whereby the low-level commands are generated (S36) at a frequency that is higher than a frequency at which the collision-free trajectory is obtained,
and wherein, preferably,
the third model (208) is based on model predictive control and/or includes a trained model, such as a model trained in reinforcement learning.

3. The computer-implemented method according to claim **2,** wherein
the heterogeneous representations of the sensed environment further include a third representation (323), such as an elevation map, which is updated (S323) at said each cycle along with the first representation (321) and the second representation (322), and
the commands are repeatedly generated (S36) at said each cycle by feeding the third representation (323) as updated last to the third model (208), in addition to the updated state of the robot and the collision-free trajectory (T2).

4. The computer-implemented method according to claim **3,** wherein
the first representation (321) is a representation of a spherical ego-centric map of the environment,
the second representation (322) is a representation of an obstacle map,
the third representation (323) is a representation of an elevation map, preferably a 2.5D elevation map, and
any or each of the first representation (321), the second representation (322), and the third representation (323), is optionally a learned map, represented by an artificial neural network.

5. The computer-implemented method according to any one of claims **2** to **4,** wherein
the method further comprises repeatedly updating (S320) a root representation (320) based on signals obtained from the set (610, 630) of sensors,
each of the first representation (321), the second representation (322), and the third representation (323), is repeatedly updated (S32) based on the root representation (320), and
the root representation (320) is preferably a representation of a sparse, 3D voxel map, and, more preferably, the root representation is a learned map represented by an artificial neural network.

6. The computer-implemented method according to any one of claims **2** to **5,** wherein
at least two representations of said heterogeneous representations are updated (S32) at said each cycle based on signals from distinct subsets of the set of sensors (630), whereby said at least two of said heterogeneous representations reflect heterogeneous perceptions of the environment, and
the set of sensors (630) used to update said two representations preferably include two or more sensors selected from a group consisting of: one or more depth sensors, one or more stereo cameras, one or more time-of-flight sensors, ultrasonic sensors, and as one or more Lidars.

7. The computer-implemented method according to any one of claims **2** to **6,** wherein
the collision-free trajectory (T2) is obtained at a first average frequency of between 5 and 100 Hertz,
the low-level commands are generated at a second average frequency of between 25 and 1 000 Hertz, the second average frequency being preferably larger than, or equal to, five times the first average frequency, and
the robot (1001) is controlled thanks to a motion controller operating at a third average frequency that is larger than, or equal to, the second average frequency, the third average frequency being preferably of between 125 and 10 000 Hertz.

8. The computer-implemented method according to any one of claim **1** to **7,** wherein
the first model (2061) comprises an actor network (42, 44) including a self-attention layer (42) and an output network (44), the latter preferably configured as a multilayer perceptron network, wherein the self-attention layer (42) is connected to the output network (44), and
the second model (2062) includes one or each of a geometric obstacle detection model and a trained model, the latter preferably trained in reinforcement learning, and
the third model (208) includes one or each of a model based on model predictive control and a trained model, the latter preferably trained in reinforcement learning.

9. The computer-implemented method according to any one of claims **1** to **8,** wherein
the method further comprises a preliminary step of training the first model (2061) according to a reinforcement learning framework, based on
training representations of one or more training environments that are commensurate with said first representation (321), as well as
rewards (210) and states of the robot (1001) computed in accordance with the training representations and actions of the robots, and
the rewards are preferably computed according to a function of a distance between the robot and any obstacle in the training representations and, preferably, a correct orientation of the robot (1001) towards a navigation goal.

10. The computer-implemented method according to claim **9,** wherein
the first model (2061) includes an actor-critic network (42 - 48), which comprises
an actor network (42, 44) for inferring a desired action, the actor network including a self-attention layer (42) and a first output network (44), the self-attention layer connected to an output network, the latter preferably configured as a multilayer perceptron network, and
a critic network (46, 48) for estimating a value function, the critic network including a self-attention layer (46) connected to a second output network (48), the latter preferably configured as a multilayer perceptron network, and
training the first model (2061) includes jointly training the actor network (42, 44) and the critic network (46, 48), for the actor network to learn to generate said initial trajectory (T1) at said each cycle at runtime.

11. The computer-implemented method according to claim **10,** wherein
the first model (2061) is trained according to a proximal policy optimisation (PPO) algorithm, preferably an asymmetric PPO algorithm.

12. The computer-implemented method according to claim **11,** wherein
the first model (2061) is gradually trained by gradually increasing a difficulty of terrain in the training environment and/or by changing a composition and/or scaling weights of the computed rewards.

13. The computer-implemented method according to any one of claim **9** to **12,** each depending on any one of claim **2** to **7,** wherein
the third model (208) is a trainable model, and
the method further comprises training the third model, in an interlaced manner with the first model (2061).

14. A robot control system for operating a legged robot (1001), wherein the system comprises processing means (600), which are adapted to be interfaced with a set of sensors and are configured to repeatedly perform algorithmic cycles at the robot, wherein each cycle of the algorithmic cycles comprises, in operation:
updating a state of the robot (1001) as well as heterogeneous representations of an environment of the robot based on signals from a set of sensors, the heterogeneous representations including
a first representation (321), such as a spherical ego-centric map, and
a second representation (322), such as an obstacle map;
generating an initial trajectory (T1) that avoids obstacles in the first representation (321), wherein the initial trajectory is generated through a first model (2061) based on the first representation and the state of the robot as updated last, the first model trained in reinforcement learning,
executing a second model (2062) based on the initial trajectory, as well as the state of the robot and the second representation (322) as updated last, to obtain a collision-free trajectory (T2), and
controlling the robot according to commands generated based on the collision-free trajectory (T2) to cause a legged locomotion of the robot.

15. A Computer program product for operating a legged robot (1001), the computer program product comprising a computer readable storage medium having program instructions embodied therewith, the program instructions executable by the processing means of the control system to cause the latter to perform all the steps of the method according to any one of claims **1** to **13.**
